(19) **Europäisches Patentamt**

**European Patent Office**

**Office européen des brevets**

(11) **EP 1 359 304 B1**

(12) **EUROPEAN PATENT SPECIFICATION**

(45) Date of publication and mention
of the grant of the patent:
**15.06.2005  Bulletin 2005/24**

(51) Int Cl.[7]: **F02D 41/02**, H02K 21/22,
F02M 57/02, F02M 51/04

(21) Application number: **03008051.9**

(22) Date of filing: **14.04.2003**

(54) **Fuel injection apparatus of an internal-combustion engine**

Brennstoffeinspritzvorrichtung einer Brennkraftmaschine

Dispositif d'injection de carburant d'un moteur à combustion interne

(84) Designated Contracting States:
**DE FR GB IT**

(30) Priority: **17.04.2002  JP 2002115527**
**07.03.2003  JP 2003061961**

(43) Date of publication of application:
**05.11.2003  Bulletin 2003/45**

(73) Proprietor: **MIKUNI CORPORATION**
**Chiyoda-ku, Tokyo 101-0021 (JP)**

(72) Inventors:
• **Miura, Osamu**
**Odawara-shi, Kanagawa 250-0055 (JP)**
• **Hirosawa, Hirokazu**
**Odawara-shi, Kanagawa 250-0055 (JP)**

(74) Representative: **Beyer, Andreas, Dr.**
**Wuesthoff & Wuesthoff,**
**Patent- und Rechtsanwälte,**
**Schweigerstrasse 2**
**81541 München (DE)**

(56) References cited:
**EP-A- 0 688 951**      **GB-A- 2 049 031**
**US-A- 3 815 556**      **US-A- 5 161 496**
**US-A- 5 502 963**

• **PATENT ABSTRACTS OF JAPAN vol. 1998, no. 13, 30 November 1998 (1998-11-30) & JP 10 205405 A (YAMAHA MOTOR CO LTD), 4 August 1998 (1998-08-04)**

**Description**

BACKGROUND OF THE INVENTION

Field of the Invention

The present invention relates to a fuel injection apparatus of an internal-combustion engine having a fuel injection system and power supply system, and more particularly, a fuel injection apparatus of an internal-combustion engine where a fuel injection system is driven by a power supply system without a battery.

Description of the Related Art

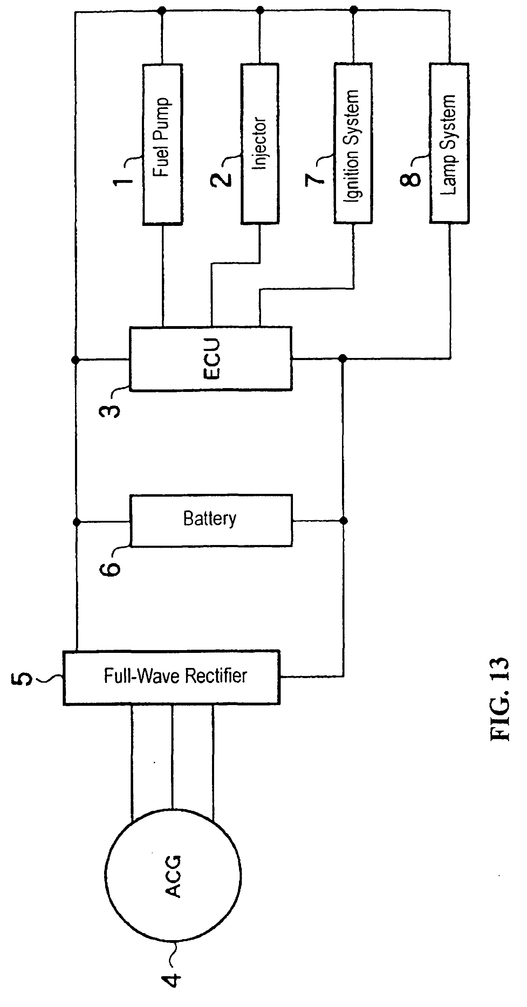

As shown in Fig. 13, a conventional fuel injection apparatus mounted on an internal-combustion engine (hereinafter referred to as an engine) has a fuel injection system including a fuel pump 1 that supplies the fuel from a fuel tank and pressurizes the fuel and an injector 2 that injects the pressurized fuel to a combustion chamber, and a power supply system including an engine control unit (ECU) 3 that controls the drive of the fuel pump 1 and injector 2, an alternating-current generator (ACG) 4 that supplies the power to these electrical loads, a full-wave rectifier 5 and a battery 6.

The power supply system is further connected to other electrical loads, e.g. an ignition system 7 including an ignition coil that ignites the injected fuel via a distributor and a spark plug, and a lamp system 8 including a head lamp, winker lamps, stop lamps and others.

In particular, in the conventional system, since it is required to increase a pressure of fuel upstream from the injector 2 to a predetermined level or more before starting the engine, the fuel pump 1 is driven in advance using the battery 6 as a power supply source to pressurize the fuel (for example, see Japanese laid-open Utility-Model application 63-93440).

In engines mounted on motor cycles, snow mobiles, etc, the construction may be such that a crankshaft is forcibly rotated by a kick lever or the like, thus also rotating an alternating-current generator (ACG) coupled to the crankshaft to generate power, and using the generated power to drive the engine control unit 3, fuel pump 1, injector 2 and others. In this case, even when the ACG 4 is set for multi-phase (three-phase) to perform full-wave rectification to increase outputs, the power to pressurize the fuel prior to startup is still required, thereby resulting in increased complexity and costs of the system.

Further, in the conventional system, since part of power subjected to full-wave rectification is used in other electrical loads such as the lamp system 8, the fuel injection system (fuel pump 1 and injector 2) and engine control unit 3 are affected by variations in loads such as the lamp system 8. Meanwhile, a method is considered of providing a plurality of coils of the AGC that performs full-wave rectification so as to supply the power separately to various electrical loads. However, such a method also results in increased complexity and costs of the system.

To enable a stable restarting of an internal combustion engine, JP 10205405 A discloses a fuel injector comprising an AC generator, a half-wave rectifier performing half-wave rectification on the power generated by the AC generator, and a capacitor that stores the power passed through the half-wave rectifier. The fuel injector further comprises an impulsive expansion element driven inter alia by the power passed through the half-wave rectifier and the capacitor, which impulsive expansion element by the impact force it generates pressurises the fuel. The device aims at securing a constant fuel supply at the time of restarting the engine.

SUMMARY OF THE INVENTION

In view of the foregoing, it is an object of the present invention to provide a fuel injection apparatus of an internal-combustion engine enabling simplification and low cost in the system, and further enabling the prevention of effects caused by variations in other electrical loads.

To this end the present invention provides a fuel injection apparatus comprising the features set out in appended claim 1.

According to this configuration, when the AC generator is driven by external forces (for example, forces caused by kick-starting the engine) and the power is generated, the first half-wave rectifier performs half-wave rectification of one of the upper and lower half-cycles of the power, and the capacitor performs smoothing on the power passed through the half-wave rectifier and stores the power. By the power passed through the first half-wave rectifier and capacitor, the plunger pump is driven and the fuel is pressurized and discharged (injected). Thus, since the plunger pump performs self-pressurization, the need of power to pressurize the fuel beforehand, i.e. the need of battery, is eliminated, and the system achieves simplification, low cost and low pollution due to less lead being used.

The above-mentioned configuration is provided with a control unit which controls the drive of the plunger

**EP 1 359 304 B1**

pump and which is driven by the power passed through the first half-wave rectifier and the capacitor.

According to this configuration, when the AC generator is driven by external forces (for example when kick-starting the engine) and power is generated, the first half-wave rectifier performs half-wave rectification of one of the upper and lower half-cycles of the power, and the capacitor performs smoothing on the power passed through the first half-wave rectifier and stores the power. By the power passed through the first half-wave rectifier and capacitor, the control unit and plunger pump are driven, while the control unit controls the drive of the plunger pump.

The above-mentioned configuration is provided with a second half-wave rectifier that performs half-wave rectification on remaining half waves other than half waves rectified by the first half-wave rectifier.

According to this configuration, among the sinusoidal power generated by the AC generator, half-wave components on one side passed through the first half-wave rectifier can be used as the power for the fuel injection system, while half-wave components on the other side passed through the second half-wave rectifier can be used as the power for other electrical loads (for example, lamp loads). Accordingly, it is possible to prevent effects due to variations in other electrical loads from imposing on the fuel injection system and to perform stable fuel injection.

In the above-mentioned configuration, the capacitance of the capacitor may be set based on driving voltages and current consumptions of the self-pressurization of the plunger pump and of the control unit.

According to this configuration, it is possible to ensure startup of the control unit by the power generated in the AC generator and to minimize effects of variations in loads of fuel injection system.

In the above-mentioned configuration, the capacitance of the capacitor may be chosen in consideration of the number of magnetic poles of the AC generator.

According to this configuration, it is possible to set the capacitor for an optimal capacitance corresponding to the number of magnetic poles of the AC generator.

In the above-mentioned configuration, the capacitance of the capacitor may be in a range of 1 to 55 mF.

According to this configuration, since the control unit and fuel injection system operate stably, it is possible to start the internal-combustion engine reliably and to maintain its stable operations.

BRIEF DESCRIPTION OF THE DRAWINGS

Fig. 1    is a system diagram showing one embodiment of a fuel injection apparatus of an internal-combustion engine according to the present invention;

Fig. 2    is a system diagram showing a fuel injection system and power supply system;

Fig. 3(a)   is a view showing an equivalent circuit of the system according to the present invention;

Fig. 3(b)   is a view showing an equivalent circuit when an input voltage of a capacitor decreases below a charged capacitor voltage;

Fig. 4(a)   is a waveform diagram showing a sine wave generated by an AC generator;

Fig. 4(b)   is a waveform diagram showing half waves rectified by a first half-wave rectifier;

Fig. 4(c)   is a waveform diagram showing half waves rectified by a second half-wave rectifier;

Fig. 5    is a graph showing the relationship between the number of magnetic poles of the AC generator and capacitance of a capacitor corresponding to load resistance;

Fig. 6    is a graph showing the relationship between the load resistance and capacitance of the capacitor corresponding to the number of magnetic poles of the AC generator;

Fig. 7    is a graph showing variations in generator voltage and in capacitor voltage corresponding to elapsed time during startup;

Fig. 8    is a graph showing variations in capacitor voltage corresponding to elapsed time during startup;

Fig. 9    is another graph showing variations in capacitor voltage corresponding to elapsed time during startup;

Fig. 10    is another graph showing variations in capacitor voltage corresponding to elapsed time during startup;

Fig. 11    is another graph showing variations in capacitor voltage corresponding to elapsed time during startup;

Fig. 12    is a graph showing experimental results of startup in an actual vehicle; and

Fig. 13    is a system diagram showing one embodiment of a conventional fuel injection apparatus.

DETAILED DESCRIPTION OF THE PREFERRED EMBODIMENTS

Embodiments of the present invention will be described below specifically with reference to accompanying drawings.

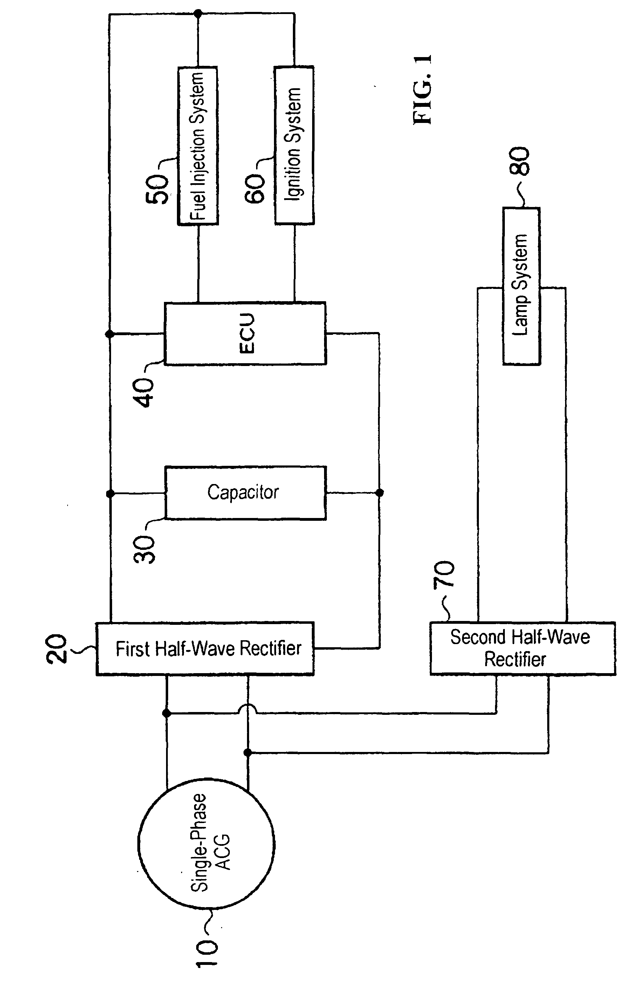

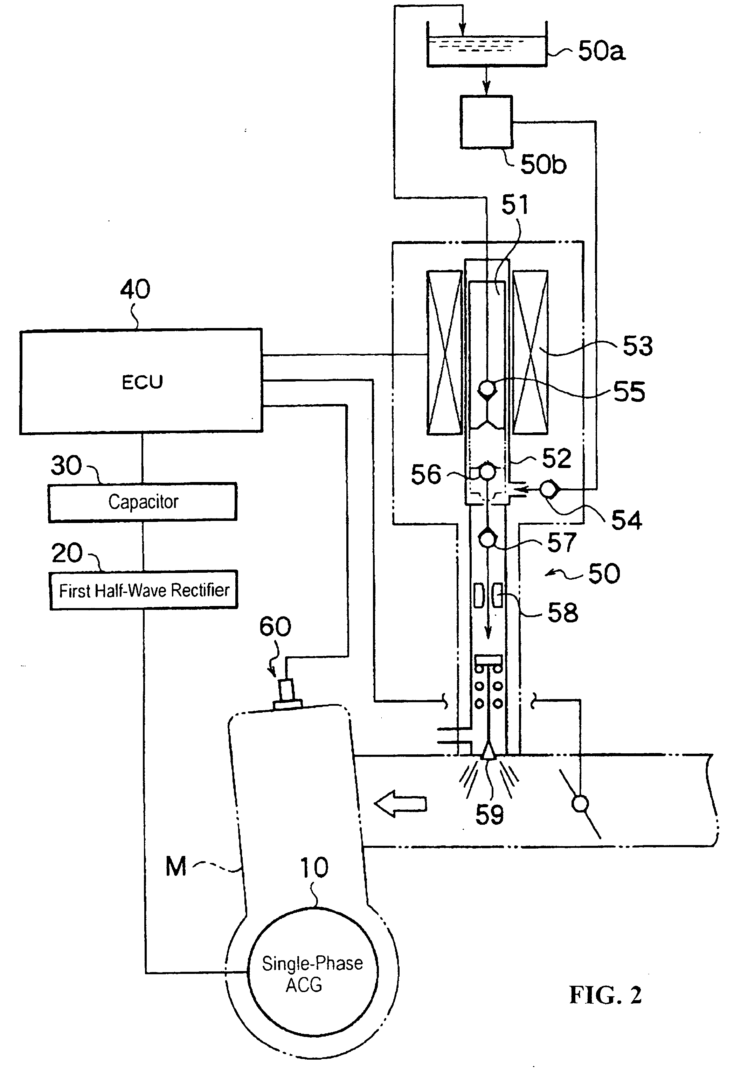

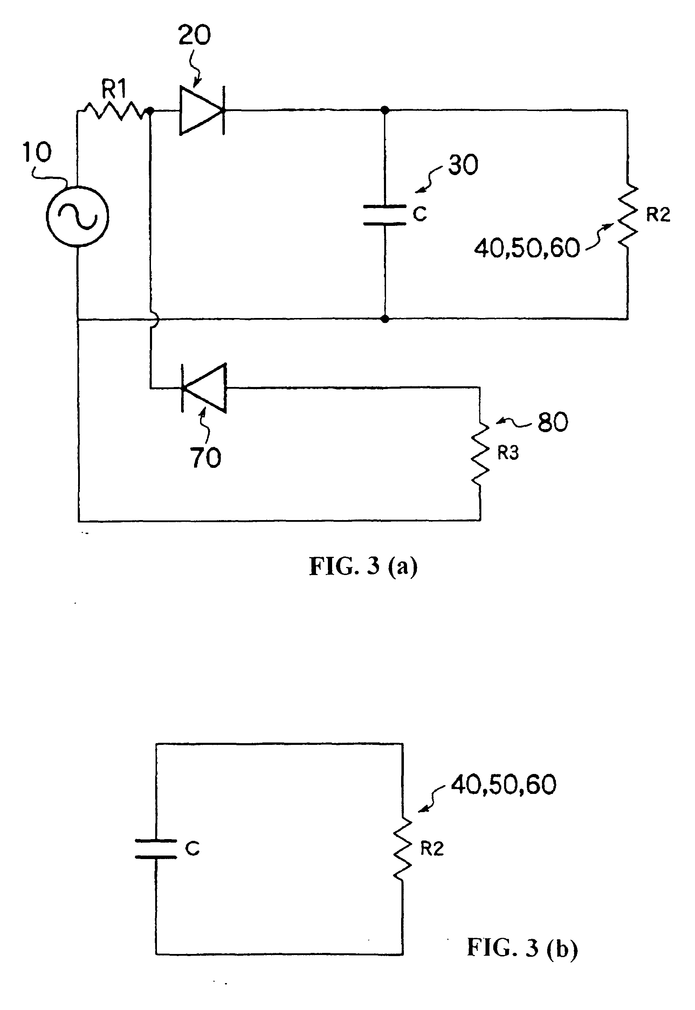

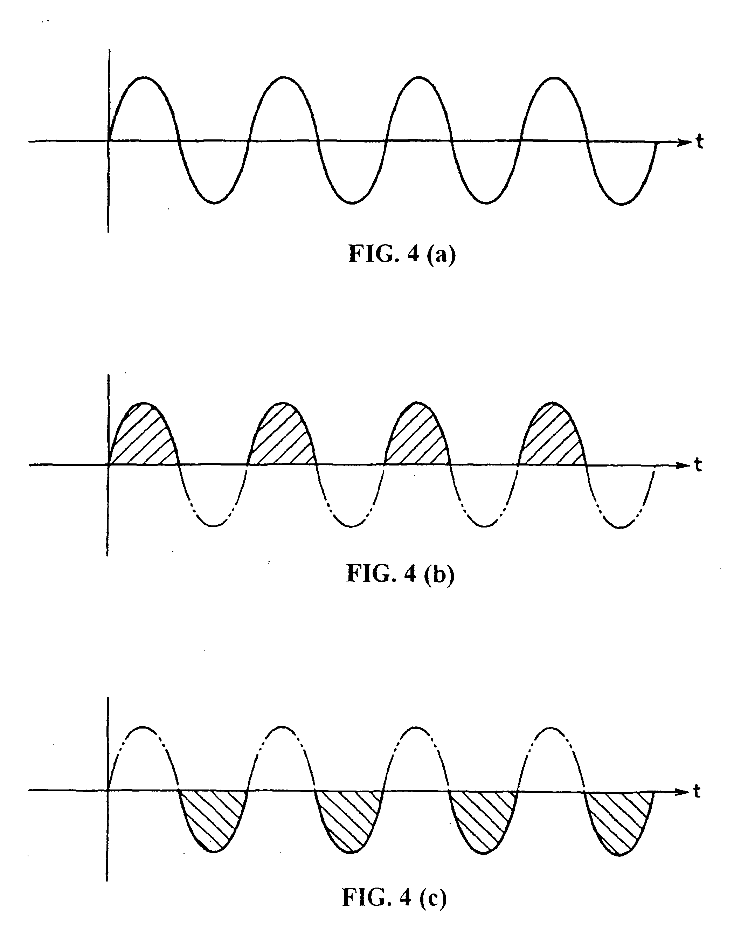

Fig. 1 to Fig. 4(c) illustrate one embodiment of a fuel injection apparatus according to the present invention, Figs. 1 and 2 are diagrams showing a system of a fuel injection system including a fuel injection apparatus and power supply system, Figs. 3(a) and 3(b) are equivalent circuit diagrams, and Figs. 4(a) to 4(c) are waveform diagrams illustrating half-wave rectification.

As shown in Figs. 1 and 2, the system is provided with a single-phase AC generator (ACG) 10, a first half-wave rectifier 20 that performs half-wave rectification on the power generated by the ACG 10, a capacitor 30 that stores the power passed through the first half-wave rectifier 20, an engine control unit (ECU) 40 as a control unit that controls the entire operation of an engine M, a fuel injection system 50 that is driven and controlled by the ECU 40, an ignition system 60, and others.

In other words, the power supply system to drive the fuel injection system 50 is formed of the AC generator 10, first half-wave rectifier 20 and capacitor 30.

The system is further provided with a second half-wave rectifier 70 that rectifies the remaining half waves (lower half side) other than the half waves (upper half side) rectified by the first half-wave rectifier 20 of the power (sine wave) generated by the AC generator 10, and the power passed through the second half-wave rectifier 70 is supplied to the lamp system 80.

In this way, the power passed through the first half-wave rectifier 20 and capacitor 30 is supplied to electrical loads including the engine control unit (ECU) 40, fuel injection system 50 and ignition system 60, while the power passed through the second half-wave rectifier 70 is supplied to other electrical loads including the lamp system 80.

Accordingly, even when electrical loads of the lamp system vary, the engine control unit (ECU) 40, fuel injection system 50 and ignition system 60 are not affected by the load variations (voltage variations). Thus, stable fuel injection and ignition operation is performed.

The AC generator 10 is a single-phase generator that is directly coupled to a crank shaft of the engine M and driven to rotate with the crank shaft. A driver steps on a kick pedal (to cause forces by kick as external forces) to rotate the crank shaft in starting the engine M, and the AC generator 10 is thereby actuated and starts generating the power. After startup of the engine M, the AC generator 10 is driven by rotation of the crank shaft caused by reciprocating motion of a piston and continues to generate the power. Since the AC generator 10 is set for the single phase, the system is simplified and has reduced cost, and the fuel injection system 50 is driven efficiently.

Further, the AC generator 10 has a plurality of magnetic poles made of magnets, and as the number of magnetic poles, for example, three to six are adopted. Corresponding to the number of magnetic poles, the frequency of the sine wave (power) generated by the AC generator 10 is determined.

The first half-wave rectifier 20 is formed of diodes and other components as shown in Fig. 3(a), and on the sine wave generated by the AC generator 10 as shown in Fig. 4(a), performs half-wave rectification and fetches only half waves on upper side as shown in Fig. 4(b).

The second half-wave rectifier 70 is formed of diodes and other components as shown in Fig. 3(a), and on the sine wave generated by the AC generator 10 as shown in Fig. 4(a), performs half-wave rectification and fetches only half waves on lower side (remaining half waves other than the half waves rectified by the half-wave rectifier 20) as shown in Fig. 4(c).

In other words, the sine wave (power) generated by the AC generator 10 is used effectively without being discarded, despite the power undergoing half-wave rectification, and it is thus possible to enhance the energy efficiency.

The engine control unit (ECU) 40 as a control unit controls the entire operation of the engine M, in other words, controls the drive of the fuel injection system 50, the drive of the ignition system 60 and others, and is internally provided with a CPU that performs various calculations and issues control signals to perform entire control, driving circuits for both the fuel injection system 50 and ignition system 60, and others.

The engine control unit (ECU) 40 is driven by the power passed through the first half-wave rectifier 20 and capacitor 30. Specifically, when the voltage of approximately 7V is supplied as driving voltage for the CPU, the system starts up.

The fuel injection system 50 is provided with a plunger 51 which is a self-pressurization plunger pump that is driven by electromagnetic forces to suck and discharge the fuel and reciprocates as shown in Fig. 2, a cylinder 52 that accommodates the plunger 51 slidably, an exciting coil 53 to cause a yoke (not shown) disposed outside of the cylinder 52 to generate magnetic lines of force, a check valve 54 that allows only the flow toward a pressure -feeding chamber defined on the front end side of the cylinder 52, a check valve 55 that allows only the flow returned from a pressure-feeding chamber disposed on a return passage formed inside the plunger 51, a spill valve 56 that blocks the return passage at the last stage of initial region of the pressure feeding, a check valve 57 that allows the discharge when the fuel inside the pressure-feeding chamber is pressurized to a predetermined pressure or more, and others.

In addition, when the power is not supplied to the coil 53, the plunger 51 is given forces by a return spring (not shown), and returns to a stop position while sucking the fuel.

Further, in a downstream portion of the check valve 57 are provided an orifice nozzle 58 narrowed to have a predetermined diameter, a poppet valve 59 that opens when the fuel passed through the orifice nozzle 58 has the pressure of a predetermined value or more, and others.

In other words, in the above-mentioned plunger pump 50, when being electromagnetically driven by the power passed through the first half-wave rectifier 20 and capacitor 30 (when the current is applied to the coil 53 with a pulse width of a predetermined value or more), the vapor is released in the initial region, while the fuel pressure-feeding is started, and the fuel in the pressure-feeding chamber is further pressurized. Then, the fuel pressurized to a predetermined pressure or more causes the check valve 57 to open, passes through the orifice nozzle 58 while being measured in amount, causes the poppet valve 59 to open, and is injected as mist toward the inlet passage.

Meanwhile, when the current to the coil 53 is interrupted, the plunger 51 is pushed back to the stop position by forces applied by the return spring. At this point, the check valve 54 opens, the fuel is sucked to the pressure-feeding chamber from a fuel tank 50a through a filter 50b, thus turning a standby state for next injection.

In this way, since the plunger pump 50 sucks the fuel in one operation by its own sucking ability and pressurizes the fuel to a proper fuel pressure to discharge (inject), the need is eliminated of pressurizing in advance the fuel by applying currents or the like, unlike systems using a conventional injector. Accordingly, the fuel injection is performed reliably even when driven by a power supply system without a battery.

The capacitor 30 stores the power passed through the first half-wave rectifier 20 while performing smoothing. The capacitor 30 serves as power supply source for the engine control unit 40, and for the fuel injection system (plunger pump) 50 and ignition system 60. Accordingly, the electrical capacity (capacitance) is chosen based on driving voltages for the plunger pump 50 and engine control unit 40 and others, and further based on the number of magnetic poles of the AC generator 10.

In other words, with respect to the capacitor 30, it is preferable to set the electrical capacity (capacitance) as high as possible in order to suppress as much as possible voltage variations occurring in driving the plunger pump 50. However, when the electrical capacity (capacitance) is excessively high, it takes a time to charge power generated by kick of a driver (by the AC generator 10) in startup, and it is not possible to start the engine control unit 40 or others. Accordingly, it is required to set the electrical capacity (capacitance) of the capacitor 30 to meet the aforementioned conditions.

In calculating a capacitor voltage Vc when power is stored in the capacitor 30, assuming that internal resistance of the AC generator 10 is R1 (dependent on the generation capacity) and combined load resistance of the fuel injection system 50 and engine control unit 40 is R2, the circuit shown in Fig. 1 becomes an equivalent circuit as shown in Fig. 3(a).

Further, when the kick-start is performed, the generated power is equivalent to a sine wave with a half cycle during which the startup begins and ends.

When it is assumed that half-wave rectified wave f(t) with a predetermined cycle is generated via the first half-wave rectifier 20 and the maximum voltage is E, the first wave $f_1(t)$ is expressed as following equation (1):

$$f_1(t) = E\sin\omega t \cdot u(t) + E\sin\omega(t-n/\omega) \cdot u(t-n/\omega)$$

$$= E\{\sin\omega t \cdot u(t) + \sin\omega(t-n/\omega) \cdot u(t-n/\omega)\} \tag{1}$$

where u(t) represents a step function.

Performing Laplace transform on equation (1) results in following equation (2):

$$F_1(s) = E\{\omega/(s^2+\omega^2) + (\omega/(s^2+\omega^2)) \cdot \exp(-ns/\omega)\}$$

$$= (E\omega/(s^2+\omega^2)) \cdot (1+\exp(-ns/\omega)) \tag{2}$$

Accordingly, Laplace transform on the full-wave is expressed as following equation (3):

$$F(s) = (E\omega/(s^2+\omega^2)) \cdot (1/(1-\exp(-ns/\omega))) \tag{3}$$

Obtained next is the voltage Vc of capacitor 30 when the half-wave rectified wave f(t) i.e. F(s) is applied to the equivalent circuit as shown in Fig. 3(a). First, transforming above equation (3) results in following equation (4):

$$F(s) = (E\omega/(s^2+\omega^2)) \cdot (1+\exp(-ns/\omega))+\exp(-2ns/\omega)$$

$$+\exp(-3ns/\omega)+\exp(-4ns/\omega)+ ... ) \tag{4}$$

Input impedance Z(s) of the above-mentioned equivalent circuit is expressed as following equation (5):

$$Z(s) = R1+(R2/sC)/(R2+1/sC)$$

$$= (R1(s+R1+R2)/R1R2C))/(s+1/R2C) \tag{5}$$

Accordingly, all flow current I(s) is expressed as following equation (6):

$$I(s) = E(s)/Z(s)$$

$$= (E\omega/(s^2+\omega^2)) \cdot \{(s+1/R2C)/(R1(s+(R1+R2)/R1R2C)\}$$

$$\cdot (1+\exp(-ns/\omega)+\exp(-2ns/\omega)+...) \tag{6}$$

Accordingly, Vc(s) is expressed as following equation (7):

$$Vc(s) = I(s) \cdot (R2/sC)/(R2+1/sC)$$

$$= \{E\omega/R1C(s^2+\omega^2) \cdot (s+(R1+R2)/R1R2C)\}$$

$$\cdot (1+\exp(-ns/\omega)+\exp(-2ns/\omega)+...) \tag{7}$$

Expanding brackets of the right side and setting the first item at $Vc_1(s)$ results in following equation (8):

$$Vc_1(s) = E\omega/R1C(s^2+\omega^2) \cdot (s+(R1+R2)/R1R2C) \tag{8}$$

Performing inverse Laplace transform on equation (8) results in following equation (9):

$$V_{C1}(t) = [E\omega/R1C\{((R1+R2)/R1R2C)^2+\omega^2\}] \cdot \exp(-(R1+R2)t/R1R2C)$$

$$-\cos\omega t+((R1+R2)/R1R2\omega C) \cdot \sin\omega t) \cdot u(t) \tag{9}$$

Since in the second and subsequent items, t is delayed by $\pi/\omega$, $2\pi/\omega$,..., respectively, Vc(t) is calculated as the sum of the items.

Meanwhile, the equivalent circuit when the input voltage of the capacitor 30 decreases below the charged capacitor voltage is as shown in Fig. 3(b). In this case, the voltage Vc(s) is expressed as following equation (10):

$$Vc(s) = I(s) \cdot R2/(s+1/R2C) \tag{10}$$

Performing inverse Laplace transform on equation (10) results in following equation (11):

$$Vc(t) = I \cdot R2 \cdot \exp(-t/R2C) \tag{11}$$

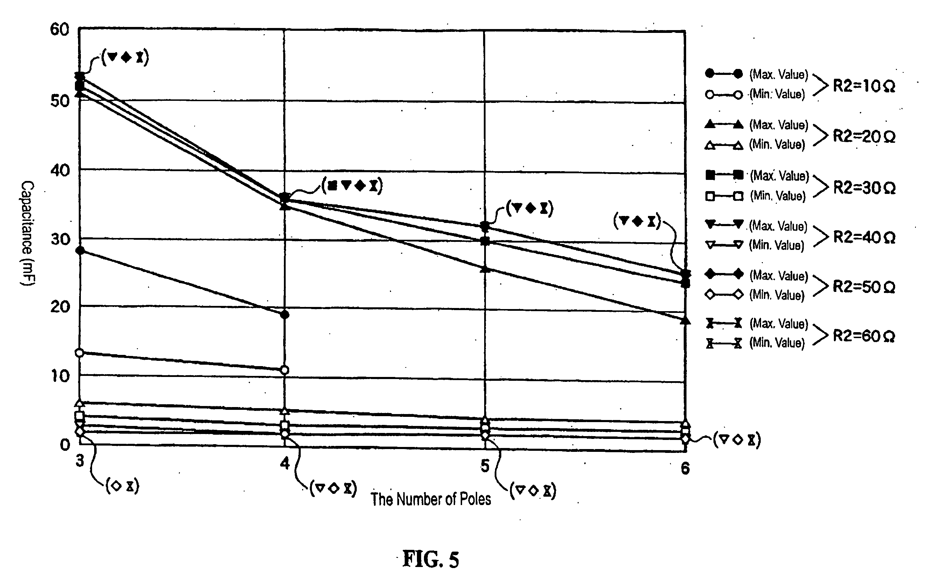

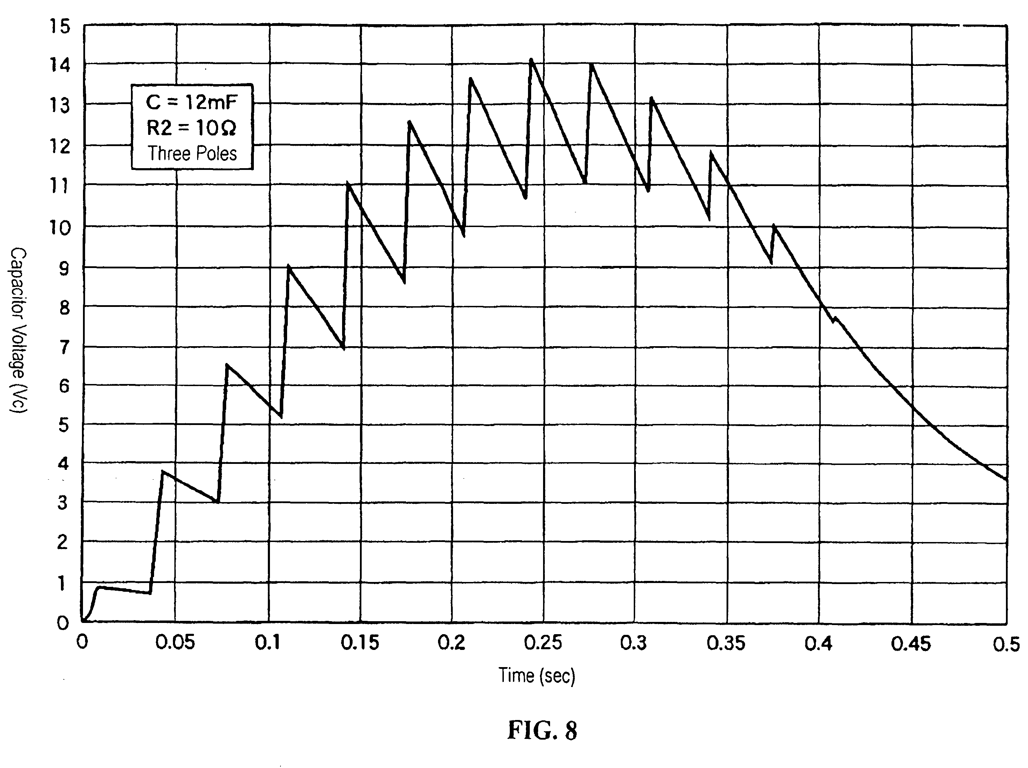

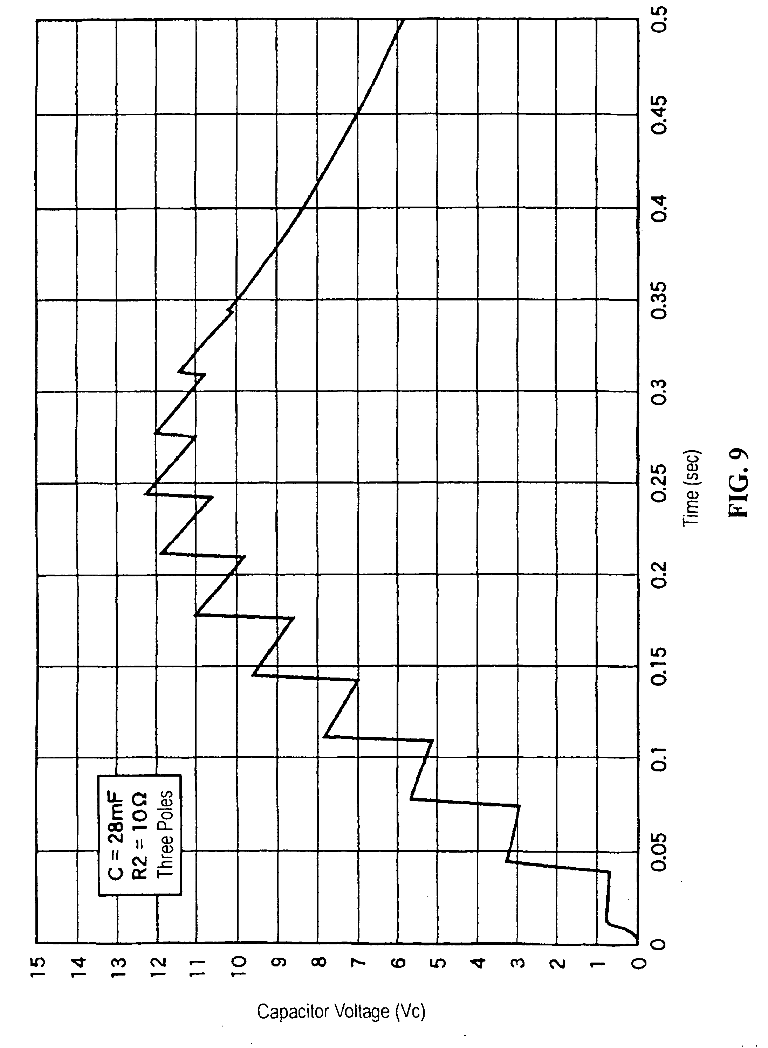

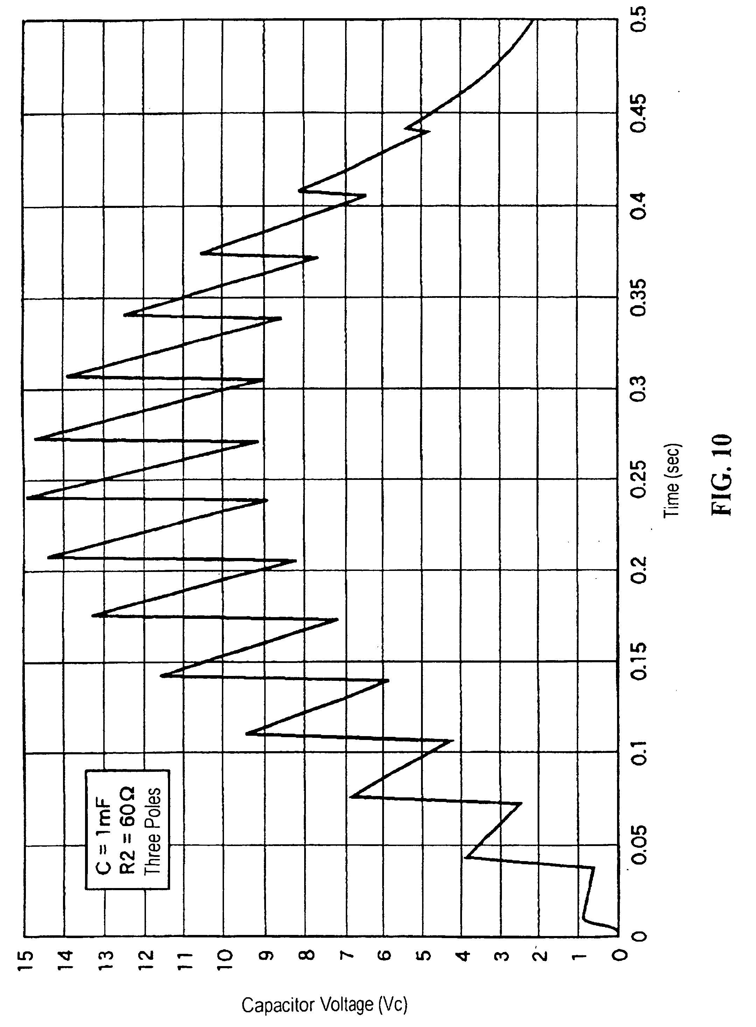

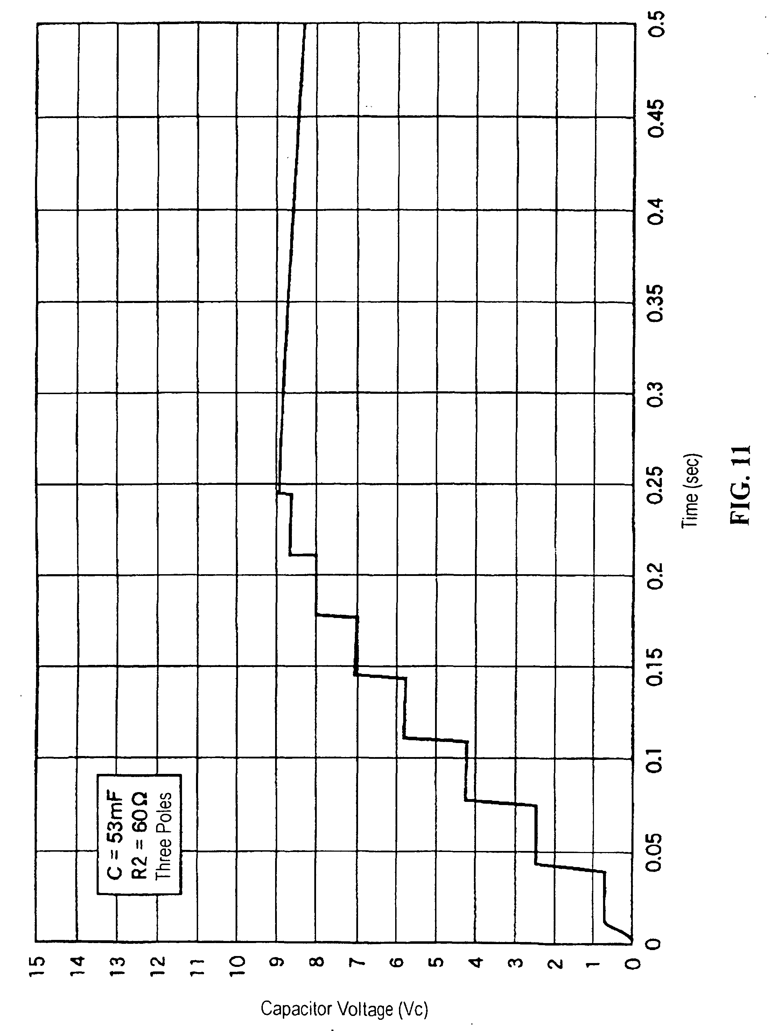

Figs. 5 to 11 show results of calculating the generator voltage of the AC generator 10 and capacitor voltage Vc corresponding to combined load resistance R2 assumed as electrical loads of the engine control unit 40 and fuel injection system 50 and the assumed number of magnetic poles of the AC generator 10, based on above-mentioned approximate expressions (9) and (11), assuming internal resistance R1 of the AC generator 10 is 0.1Ω.

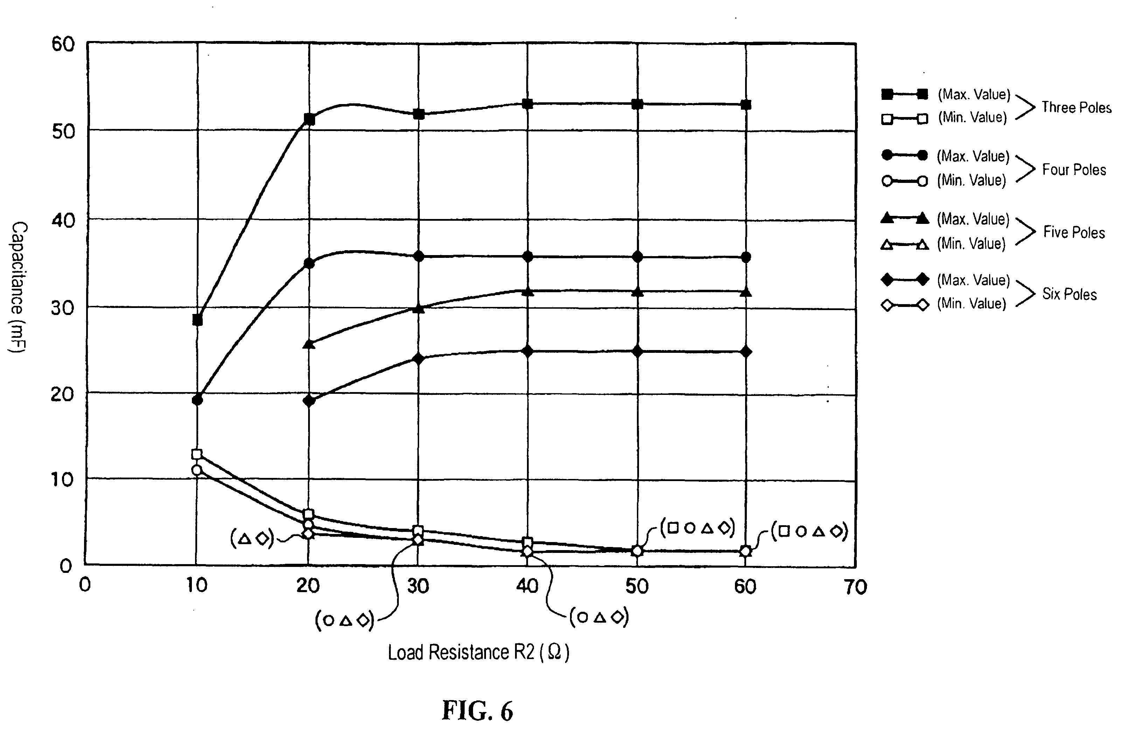

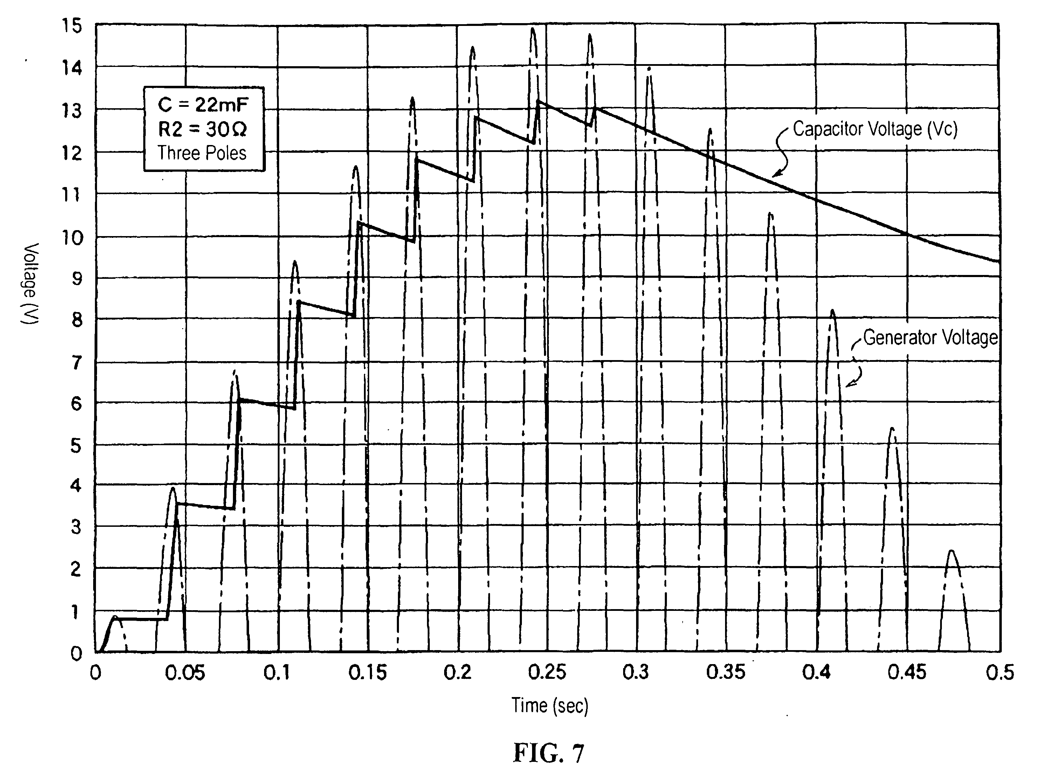

Fig. 5 is a graph showing the relationship between the number of poles and capacitance (electrical capacity) of the capacitor. Fig. 6 is a graph showing the relationship between combined load resistance R2 and capacitance of the capacitor. Figs. 7 to 11 are graphs showing variations in capacitor voltage Vc versus elapsed time during startup when the capacitance of the capacitor and combined load resistance R2 is varied.

With respect to these calculation results, as shown in Figs. 7 to 11, the capacitor voltage Vc reaches approximately 7V in about 0.15 seconds, and then keeps 8V or more for at least 0.25 seconds. In other words, 7V is ensured which is the minimum driving voltage required for operation of the engine control unit 40, and further 8V is ensured with a margin for stable operation.

Accordingly, as shown in Figs. 5 and 6, with respect to capacitance C of the capacitor 30, approximately 55mF is selected as an upper limit such that the engine control unit 40 operates, while approximately 1mF is selected as a lower limit such that the fuel injection system 50 stably operates. A range of approximately 1mF to 55mF is preferably selected to start the engine M and maintain its stable operation.

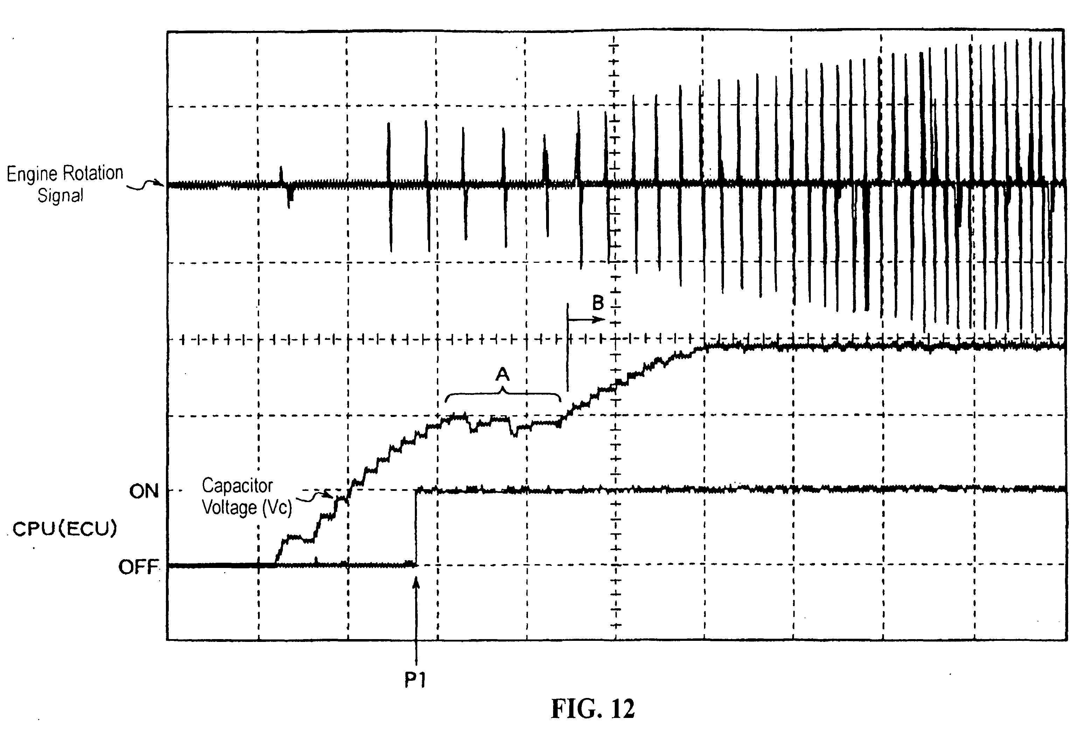

Fig. 12 is a graph showing results of the case where capacitance C of the capacitor 30 was 22mF and the startup experiment was performed on an actual vehicle. The graph shows an output signal of a pickup coil indicative of engine rotation, capacitor voltage Vc and reset terminal voltage of the CPU of the engine control unit 40.

As shown in Fig. 12, by a single time of kick-start, the capacitor voltage Vc increases first, and the CPU turns ON (starts) at P1. Subsequently, the capacitor voltage Vc becomes flat because the charge amount decreases in A-region due to driving loads of the fuel injection system 50 and ECU 40, then increases again, and is stably constant in B-region where the engine M starts and in subsequent regions.

Thus, in starting the engine, the power (voltage) is ensured which is required to start and continuously operate the engine M, without using a battery. In other words, since it is possible to start and operate the engine M by the power supply system where a battery is eliminated, it is possible to implement cost reduction due to simplification in circuitry and low pollution due to battery-less (lead-free) operation.

As described above, according to the fuel injection apparatus of an internal-combustion engine according to the present invention, a single-phase AC generator driven by external forces during startup, half-wave rectifier and capacitor for power storage are used as a power supply system for driving a fuel injection system, while a self-pressurization plunger pump is used as the fuel injection system, whereby a battery to pressurize the fuel in advance is not required and it is possible to achieve simplification, low cost and low pollution due to a lead-free system.

Further, a second half-wave rectifier is provided to rectify remaining half waves other than those half waves used in driving the fuel injection system, and it is thereby possible to supply the power to other electrical loads such as a lamp system. It is thus possible to prevent the fuel injection system from being affected by variations in other electrical loads and to achieve stable fuel injection.

**Claims**

1. A fuel injection apparatus of an internal-combustion engine (M) comprising

  - a fuel injection system (50) for injecting fuel to the internal-combustion engine (M) and
  - a power supply system for supplying power to drive the fuel injection system (50) and to electrical loads other than the fuel injection system (50), wherein the power supply system comprises

    -- a single-phase AC generator (10) that is driven by external forces during start-up,
    -- a first half-wave rectifier (20) that performs half-wave rectification of one of the upper and lower half-cycles of the AC power generated by the AC generator (10),
    -- a capacitor (30) that stores the power passed through the first half-wave rectifier (20), and

-- a second half-wave rectifier (70) that performs half-wave rectification of the other of the upper and lower half-cycles of the AC power generated by the AC generator (10),

and wherein the fuel injection system (50) comprises an electromagnetically driven self-pressurization plunger pump for sucking and discharging the fuel and a control unit (40) for controlling the drive of the self-pressurization plunger pump which are provided with the power passed through the first half-wave rectifier (20) and the capacitor (30), and wherein the electrical loads other than the fuel injection system (50) are provided with the power passed through the second half-wave rectifier (70).

2. The fuel injection apparatus according to claim 1, wherein a capacitance of the capacitor (30) is based on driving voltages and current consumptions of the self-pressurization plunger pump and of the control unit (40).

3. The fuel injection apparatus according to claim 2, wherein the capacitance of the capacitor (30) is based on the number of magnetic poles of the AC generator (10).

4. The fuel injection apparatus according to claims 2 or 3, wherein the capacitance of the capacitor (30) is in a range of 1 to 55 mF.

**Patentansprüche**

1. Kraftstoffeinspritzvorrichtung für einen Verbrennungsmotor (M), mit

- einem Kraftstoffeinspritzsystem (50) zum Einspritzen von Kraftstoff in den Verbrennungsmotor (M),
- einem Energieversorgungssystem zum Liefern von Energie zum Antreiben des Kraftstoffeinspritzsystems (50) und an andere elektrische Lasten als das Kraftstoffeinspritzsystem (50), wobei das Energieversorgungssystem aufweist

-- einen Einphasenwechselstromgenerator (10), der während des Startens durch externe Kräfte angetrieben wird,
-- einen ersten Halbwellengleichrichter (20), der eine Halbwellengleichrichtung entweder der oberen oder der unteren Halbwellen des von dem Wechselstromgenerator (10) erzeugten Wechselstroms durchführt,
-- einen Kondensator (30), der die durch den ersten Halbwellengleichrichter (20) geführte Energie speichert, und
-- einen zweiten Halbwellengleichrichter (70), der eine Halbwellengleichrichtung der anderen, oberen oder unteren Halbwellen des von dem Wechselstromgenerator (10) erzeugten Wechselstroms durchführt,

wobei das Kraftstoffeinspritzsystem (50) eine elektromagnetisch angetriebene, selbstansaugende Kolbenpumpe zum Ansaugen und Abgeben des Kraftstoffs und eine Steuereinheit (40) zum Steuern des Antriebs der selbstansaugenden Kolbenpumpe aufweist, die mit der durch den ersten Halbwellengleichrichter (20) und den Kondensator (30) geführten Energie versorgt werden, und wobei die übrigen elektrischen Lasten außer dem Kraftstoffeinspritzsystem (50) mit der Energie versorgt werden, die durch den zweiten Halbwellengleichrichter (70) geführt worden ist.

2. Kraftstoffeinspritzvorrichtung nach Anspruch 1, bei der eine Kapazität des Kondensators (30) auf Antriebsspannungen und Stromverbräuchen der selbstansaugenden Kolbenpumpe und der Steuereinheit (40) basiert.

3. Kraftstoffeinspritzvorrichtung nach Anspruch 2, bei der die Kapazität des Kondensators (30) auf der Anzahl magnetischer Pole des Wechselstromgenerators (10) basiert.

4. Kraftstoffeinspritzvorrichtung nach Anspruch 2 oder 3, bei der die Kapazität des Kondensators (30) in einem Bereich von 1 bis 55 mF liegt.

**Revendications**

1. Dispositif d'injection de carburant d'un moteur à combustion interne (M) comprenant :

- un système d'injection de carburant (50) pour injecter du carburant pour le moteur à combustion interne (M) et

- un système d'alimentation pour fournir une puissance pour commander le système d'injection de carburant (50) et à des charges électriques autres que le système d'injection de carburant (50), dans lequel le système d'alimentation comprend :

-- un générateur de courant alternatif monophasé (10) qui est commandé par des forces externes pendant un démarrage,
-- un premier redresseur simple alternance (20) qui effectue un redressement simple alternance de l'un des demi-cycles supérieur et inférieur de la puissance alternative générée par le générateur de courant alternatif (10),
-- un condensateur (30) qui stocke la puissance qui est passée à travers le premier redresseur simple alternance (20), et
-- un deuxième redresseur simple alternance (70) qui effectue un redressement simple alternance de l'autre des demi-cycles supérieur et inférieur de la puissance alternative générée par le générateur de courant alternatif (10),

et dans lequel le système d'injection de carburant (50) comprend une pompe à piston à auto-pressurisation commandée électromagnêtiquement pour aspirer et refouler le carburant et une unité de commande (40) pour commander le dispositif de commande de la pompe à piston à auto-pressurisation qui reçoivent la puissance qui est passée à travers le premier redresseur simple alternance (20) et le condensateur (30), et dans lequel les charges électriques autres que le système d'injection de carburant (50) reçoivent la puissance qui est passée à travers le deuxième redresseur simple alternance (70).

2. Dispositif d'injection de carburant selon la revendication 1, dans lequel une capacitance du condensateur (30) est basée sur des tensions de commande et des consommations de courant de la pompe à piston à auto-pressurisation et de l'unité de commande (40).

3. Dispositif d'injection de carburant selon la revendication 2, dans lequel la capacitance du condensateur (30) est basée sur le nombre de pôles magnétiques du générateur de courant alternatif (10).

4. Dispositif d'injection de carburant selon les revendications 2 ou 3, dans lequel la capacitance du condensateur (30) est dans une plage de 1 à 55 mF.

FIG. 1

**FIG. 2**

**FIG. 3 (a)**

**FIG. 3 (b)**

FIG. 4 (a)

FIG. 4 (b)

FIG. 4 (c)

FIG. 5

**FIG. 6**

EP 1 359 304 B1

FIG. 7

**FIG. 8**

FIG. 9

EP 1 359 304 B1

FIG. 10

EP 1 359 304 B1

**FIG. 11**

Engine Rotation Signal

B

A

ON

Capacitor Voltage (Vc)

CPU(ECU)

OFF

P1

**FIG. 12**

FIG. 13